# EUROPEAN PATENT APPLICATION

(11) **EP 4 497 953 A1**
(43) Date of publication of application: **29.01.2025**
(21) Application number: 23774969.2
(22) Date of filing: 22.03.2023
(51) Int. Cl.: F15B 1/14, F16J 3/04, F16J 15/52

(54) **ACCUMULATOR**

(30) Priority: 23.03.2022 JP 2022047105
(71) Applicant: NHK Spring Co., Ltd., Yokohama-shi, Kanagawa 236-0004 (JP)
(72) Inventor: KUROKAWA, Tomoya, Yokohama-shi, Kanagawa 236-0004 (JP); NAKANO, Naohito, Yokohama-shi, Kanagawa 236-0004 (JP)
(74) Representative: Hoffmann Eitle
(86) International application number: PCT/JP2023/011287
(87) International publication number: WO 2023/182374

(57) **Abstract**

An accumulator according to the present invention is an accumulator including: an exterior body including a bottom, a shell and a port; and a bellows provided inside the exterior body and having an S-shape being capable of expansion and contraction. In a case where the bellows has expanded maximally in the accumulator, the bellows has been expanded from a free state where no load other than gravitational force is being applied to the bellows.

## Description

### Field

The present invention relates to, for example, accumulators.

### Background

Bellows have been used conventionally as fluid separation membranes or fluid sealing membranes having airtightness and stretchability in accumulators (see, for example, Patent Literature 1). A bellows is a cylindrical member having a lateral surface with a pleated shape and is capable of expansion and contraction. A bellows with a pleated portion having a so-called U-shape or a shape curved in an S-shape has been known. Furthermore, a bellows is provided in an internal space formed by an exterior body composed of a bottom, a shell, and a port. A bellows having an S-shape and in an accumulator is usually used such that the bellows expands and contracts over a range of deformation from a state where no load other than its weight is being applied to the bellows, the deformation being in a direction of compression.

### Citation List

### Patent Literature

Patent Literature 1: International Publication Pamphlet No. WO 2013/187165

### Summary

### Technical Problem

When weight reduction of accumulators is desired, bellows are also to be subject to weight reduction. If weight of material is attempted to be reduced by decrease in the number of ridges of the pleated portion of a bellows having an S-shape, for example, the distance (pitch) between the protruded portions is increased, the amplitude per ridge is increased, and durability of the bellows may thus be reduced.

The present invention has been made in view of the above and an object thereof is to provide an accumulator enabling minimization of reduction in durability of the accumulator and enabling weight reduction of the accumulator, the accumulator using a bellows having an S-shape.

### Solution to Problem

To solve the above-described problem and achieve the object, an accumulator according to the present invention includes: an exterior body including a bottom, a shell and a port; and a bellows provided inside the exterior body and having an S-shape being capable of expansion and contraction, wherein in a case where the bellows has expanded maximally in the accumulator, the bellows has expanded from a free state where no load other than gravitational force is being applied to the bellows.

Moreover, in the above-described accumulator according to the claimed invention, an expansion rate of the bellows in an expansion direction is set to be equal to or less than a permissible expansion rate calculated based on Weibull analysis.

Moreover, in the above-described accumulator according to the claimed invention, the permissible expansion rate is 9.3%.

Moreover, in the above-described accumulator according to the claimed invention, the bellows has a cylindrical shape extending in a pleated shape and includes repetitions of: an outer peripheral turn provided near an outer periphery; an inner peripheral turn provided near an inner periphery; and plural curved portions provided between the outer peripheral and inner peripheral turns, adjacent ones of the plural curved portions having curved forms inverse to each other.

Moreover, in the above-described accumulator according to the claimed invention, the bellows is made of stainless steel.

### Advantageous Effects of Invention

The present invention has an effect of enabling minimization of reduction in durability of an accumulator using a bellows having an S-shape and enabling weight reduction of the accumulator.

### Brief Description of Drawings

FIG. 1 is a sectional diagram illustrating a configuration of an accumulator according to an embodiment of the present invention.
FIG. 2 is an enlarged view of a bellows in a region R illustrated in FIG. 1.
FIG. 3 is a diagram for illustration of expansion and contraction of the bellows applied to the accumulator.
FIG. 4 is a diagram for illustration of breakage durability counts in relation to expansion or contraction of the bellows.

### Description of Embodiments

A mode for implementing the present invention (hereinafter, referred to as an "embodiment") will hereinafter be described by reference to the appended drawings. The drawings are schematic, a relation between a thickness and a width of each portion and ratios among thicknesses of respective portions may be different from the actual relation and ratios, and the drawings may also include a portion that differs in its dimensional relations or ratios among the drawings.

### Embodiment

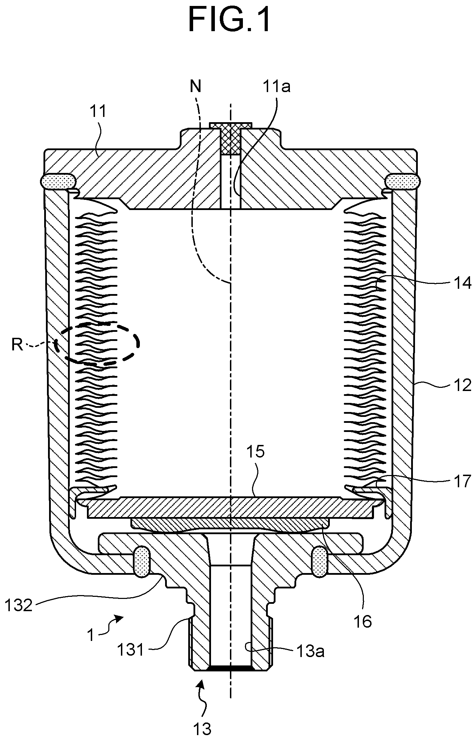

FIG. 1 is a sectional diagram illustrating a configuration of an accumulator according to an embodiment of the present invention. An accumulator 1 illustrated in FIG. 1 includes: a bottom 11; a shell 12; a port 13; a bellows 14 housed in an internal space formed of the bottom 11, the shell 12, and the port 13; a cap body portion 15; a cap elastic portion 16; and a guide bellows 17. The bottom 11, the shell 12, and the port 13 compose an exterior body of the accumulator 1.

The bottom 11 and the port 13 are formed by using, for example, a cold-worked material. The shell 12 is formed by using, for example, a hot-worked material.

A space formed by the bottom 11, the shell 12, and the port 13 is divided by the bellows 14 in the accumulator 1. Specifically, spaces different from each other are formed outside and inside the bellows 14. The internal space in the bellows 14 communicates with the outside via a hole 11a in the bottom 11. The space outside the bellows 14 communicates with the outside via a hole 13a in the port 13. FIG. 1 illustrates an example where central axes of the holes 11a and 13a coincide with a central axis N of the accumulator 1.

Furthermore, the bottom 11, the shell 12, and the port 13 are firmly fixed to each other by being welded to each other at their respective joint portions.

The accumulator 1 has liquid (hydraulic oil) or gas (for example, nitrogen gas) enclosed in each of the space (bellows external space) formed by the exterior body and the bellows 14 and the internal space in the bellows 14. For example, liquid is introduced into the bellows external space and gas is enclosed in the internal space.

The port 13 has: an introduction portion 131 that extends tubularly and is an inlet for the liquid into the shell 12; and an engagement portion 132 that is connected with one end of the introduction portion 131 and engages with an inner wall surface of the shell 12.

The bellows 14 has a cylindrical shape. A lateral surface portion of the bellows 14 has a pleated shape with repeated ridges and grooves, and is expanded and contracted by loads from the outside. Furthermore, an interval between the shell 12 and the bellows 14 is maintained by the guide bellows 17 provided peripherally to the bellows 14 and the bellows 14 is thereby capable of smooth expanding and contracting operation. The bellows 14 is formed by using, for example, stainless steel (SUS304). Furthermore, the guide bellows 17 is formed by using, for example, polybutylene terephthalate (PBT) or polyamide.

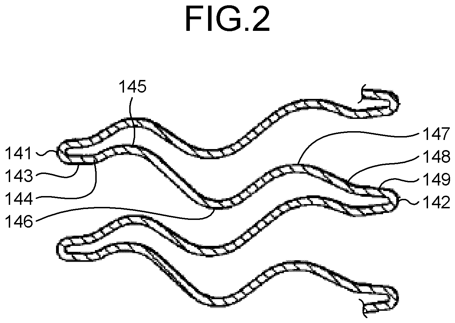

Details of a shape of the bellows 14 will now be described by reference to FIG. 2. FIG. 2 is an enlarged view of a bellows in a region R illustrated in FIG. 2. The bellows 14 has five curved portions and two linear portions, from its outer peripheral turn to its inner peripheral turn. Specifically, the bellows 14 has an outer peripheral turn 141, an inner peripheral turn 142, a first linear portion 143, a first curved portion 144, a second curved portion 145, a third curved portion 146, a fourth curved portion 147, a fifth curved portion 148, and a second linear portion 149. The first linear portion 143, the first curved portion 144, the second curved portion 145, the third curved portion 146, the fourth curved portion 147, the fifth curved portion 148, and the second linear portion 149 are positioned in a sequence from the outer peripheral turn 141 to the inner peripheral turn 142. The curved portions are curved such that curved forms of adjacent ones of the curved portions are inverse to each other. Furthermore, the bellows 14 is configured to extend with a sequence inverse to the above mentioned sequence (the second linear portion 149, the fifth curved portion 148, ..., and the first linear portion 143) from the inner peripheral turn 142 to the next outer peripheral turn 141.

The bellows 14 has the pleated shape composed of repetitions of an S-shaped protrusion forming a ridge that is the outer peripheral turn 141 and a groove that is the inner peripheral turn 142, for example. For example, its outer diameter is 60 mm, its inner diameter is 43 mm, and a distance (pitch) between ridges (outer peripheral turns 141) is set in a range of 1.9 mm or more and 2.4 mm or less. Furthermore, in a state where adjacent ones of the protrusions are in close contact with each other (closely contacting state), the bellows has a length that is 30% or more and 40% or less, for example, about 34%, of its length in a state where no load other than gravitational force is being applied to the bellows (free state), these lengths being along directions of the expansion and contraction. Ranges over which conventional bellows expand and contract in accumulators have been designed to be within a range from their free state to their closely contacting state.

As illustrated in FIG. 1, the cap body portion 15 has a plate shape and covers an opening of the bellows 14, the opening being at an opposite end of the bellows 14, the opposite end being opposite to an end where the bottom 11 is, an end portion of the bellows 14 is welded to the cap body portion 15, and the cap body portion 15 thereby seals up the opening. The cap body portion 15 is formed by using a material having durability in a pressure state (low pressure or high pressure) in the accumulator 1. The cap body portion 15 is formed by using, for example, a metal, specifically, Steel Plate Hot Commercial (SPHC). The cap body portion 15 preferably has thermal resistance according to a state of usage.

The cap elastic portion 16 has a plate shape and is provided on an opposite side of the cap body portion 15, the opposite side being opposite to a side where the bellows 14 is. The cap elastic portion 16 is positioned between the port 13 and the cap body portion 15 and seals in the liquid (hydraulic oil) between the shell 12 and the bellows 14. The cap elastic portion 16 is formed by using, for example, acrylonitrile butadiene rubber (NBR) or ethylene-propylene rubber (EPDM).

As to the cap body portion 15 and the cap elastic portion 16, the cap elastic portion 16 is bonded to the cap body portion 15 by, for example, application of an adhesive on an adherend surface of the cap body portion 15 after surface treatment by phosphoric acid treatment of the adherend surface.

A bellows assembly is formed of the cap body portion 15 and the cap elastic portion 16.

In response to a change in pressure in a line connected to the accumulator 1, for example, in response to supply of the liquid via the hole 13a in the port 13, the liquid flows into the accumulator 1 from the hole 13a in the port 13 and the cap-bellows assembly is thereby pushed up. Pressure in the space between the bellows 14 and the shell 12 is always the same as pressure inside the bellows 14.

Furthermore, in a case where the hydraulic oil has flown in from the hole 13a due to an increase in oil pressure in the line connected to the accumulator 1, the bellows 14 contracts when the pressure in the bellows 14 becomes, due to the hydraulic oil, equal to or larger than enclosure pressure of the accumulator 1. On the other hand, in response to a decrease in the oil pressure in the line and expansion (return) of the bellows 14 from the contracted state, the hydraulic oil is discharged outside from the hole 13a. This discharge of the liquid from the hole 13a controls a state of pressurization by the accumulator 1.

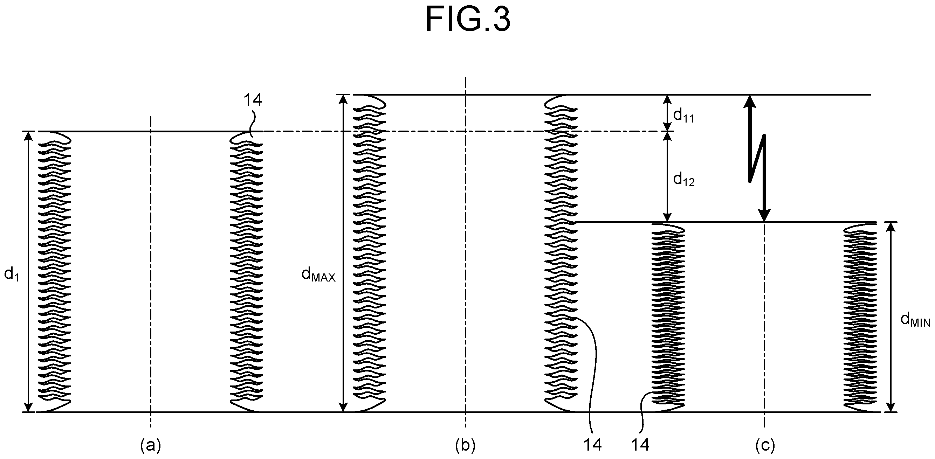

FIG. 3 is a diagram for illustration of expansion and contraction of the bellows applied to the accumulator. In FIG. 3, (a) illustrates the bellows 14 in a state (free state) where no load other than gravitational force is being applied. In FIG. 3, (b) illustrates a state (expanded state) where the bellows 14 has been expanded from the free state. In FIG. 3, (c) illustrates a state (contracted state) where the bellows 14 has been contracted from the free state. In FIG. 3, (b) and (c) respectively illustrate states where the bellows 14 has been maximally expanded (d_{MAX}) or contracted (d_{MIN}) in a range of usage. The contracted state illustrated by (c) in FIG. 3 corresponds to the above mentioned closely contacting state.

Bellows 14 are conventionally designed to operate from the free state illustrated by (a) in FIG. 3 to the contracted state illustrated by (c) in FIG. 3 in accumulators. That is, bellows 14 conventionally operate only in their contraction ranges.

By contrast, in this embodiment, the bellows 14 is designed to operate over a range from the expanded state to the contracted state. That is, the bellows 14 operates over a range including an expansion range and a contraction range, via the free state. If the bellows 14 has expanded maximally in the accumulator 1, the bellows 14 has expanded from the free state. An extension d₁₁ resulting from the maximal expansion (d_{MAX}) of the bellows 14 is set according to a permissible expansion rate that is an expansion rate, at which fatigue strength is obtained, the fatigue strength being equivalent to fatigue strength of the bellows upon application of amplitude in the contraction range.

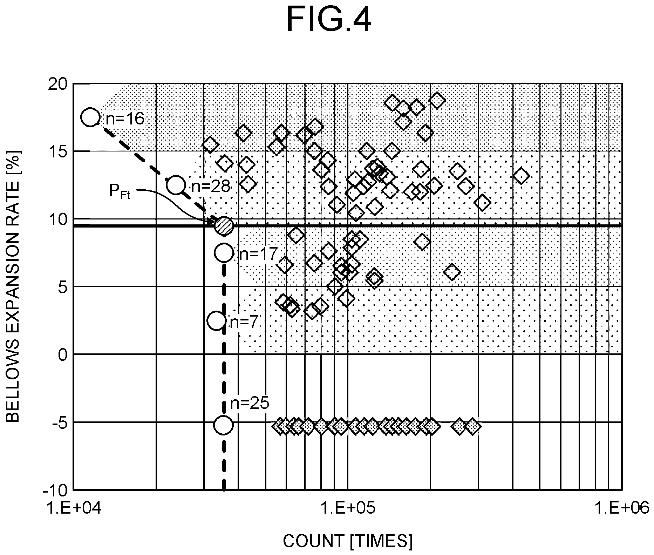

FIG. 4 is a diagram for illustration of breakage durability counts in relation to expansion or contraction of the bellows. FIG. 4 is a diagram having, plotted therein (diamond marks), expansion rates at breakage durability counts in the expansion range for the above mentioned size (the outer diameter of 60 mm and the inner diameter of 43 mm) and expansion rates at breakage durability counts in the contraction range. In FIG. 4, extensions in the contraction range are displayed negatively (-), with an expansion rate of zero corresponding to the free state. A free length in the free state is measured by a load testing machine, and an expansion rate was calculated by comparison between a breakage position (an upper limit value or a lower limit value) and the free length. Furthermore, FIG. 4 illustrates, with circular plots, results of calculation of durability counts by Weibull analysis in a range of expansion rates, the durability counts being durability counts, at which breakage occurrence rates become 0.3% or less. Analysis ranges in the Weibull analysis were 5% in terms of expansion rates and were set to, for example, 0 to 5%, 5 to 10%, ..., and 15 to 20%. In FIG. 4, each "n" assigned to a plot indicates the number of samples in that range. A change point P_{Ft} of durability counts is calculated from analysis points (circular marks) in the respective ranges and an expansion rate corresponding to this change point P_{Ft} is found as the permissible expansion rate. This permissible expansion rate is set as the maximum expansion rate of the bellows 14. In the example illustrated in FIG. 4, the permissible expansion rate is found to be 9.3%.

In this embodiment, an expansion and contraction range is set, the expansion and contraction range being a range having, added together, expansion rates from the free state to the contracted state (closely contacting state) and expansion rates from the free state to the expanded state. Therefore, in the maximally expanded state, the bellows 14 is in a state expanded in the expansion direction.

In this embodiment, the expansion and contraction range of the bellows 14 in the accumulator 1 is set such that the expansion range is also used without exceeding the permissible expansion rate. This embodiment enables minimization of reduction in durability of the accumulator 1 or the bellows 14 as well as weight reduction because the size of the bellows 14 in the free state is able to be made smaller than that of a bellows using only a contraction range, that is, the number of ridges (protrusions) is able to be reduced, while achieving a durability count equivalent to that of the bellows using only the contraction range.

A mode for implementing the present invention has been described thus far, but the present invention is not to be limited only to the above described embodiment.

The present invention may thus include various embodiments not described herein, and various design changes, for example, may be made without departing from the technical ideas determined by the claims.

### Industrial Applicability

As described above, an accumulator according to the present invention is suitable for minimizing reduction in durability of accumulators using S-shaped bellows and for weight reduction of these accumulators.

### Reference Signs List

- 1: ACCUMULATOR

- 11: BOTTOM
- 12: SHELL
- 13: PORT
- 14: BELLOWS
- 15: CAP BODY PORTION
- 16: CAP ELASTIC PORTION
- 17: GUIDE BELLOWS
- 141: OUTER PERIPHERAL TURN
- 142: INNER PERIPHERAL TURN
- 143: FIRST LINEAR PORTION
- 144: FIRST CURVED PORTION
- 145: SECOND CURVED PORTION
- 146: THIRD CURVED PORTION
- 147: FOURTH CURVED PORTION
- 148: FIFTH CURVED PORTION
- 149: SECOND LINEAR PORTION

## Claims

1. An accumulator comprising:
an exterior body including a bottom, a shell and a port; and
a bellows provided inside the exterior body and having an S-shape being capable of expansion and contraction,
wherein
in a case where the bellows has expanded maximally in the accumulator, the bellows has expanded from a free state where no load other than gravitational force is being applied to the bellows.

2. The accumulator according to claim 1, wherein an expansion rate of the bellows in an expansion direction is set to be equal to or less than a permissible expansion rate calculated based on Weibull analysis.

3. The accumulator according to claim 2, wherein the permissible expansion rate is 9.3%.

4. The accumulator according to claim 1, wherein
the bellows has a cylindrical shape extending in a pleated shape and includes repetitions of:
an outer peripheral turn provided near an outer periphery;
an inner peripheral turn provided near an inner periphery; and
plural curved portions provided between the outer peripheral and inner peripheral turns, adjacent ones of the plural curved portions having curved forms inverse to each other.

5. The accumulator according to any one of claims 1 to 4, wherein the bellows is made of stainless steel.
